(19) Europäisches Patentamt / European Patent Office / Office européen des brevets

(11) **EP 3 514 857 A1**

(12) **EUROPEAN PATENT APPLICATION**
published in accordance with Art. 153(4) EPC

(43) Date of publication:
**24.07.2019 Bulletin 2019/30**

(51) Int Cl.:
**H01M 2/26** *(2006.01)*　　**B23K 20/10** *(2006.01)*
**B23K 31/00** *(2006.01)*　　**H01M 10/04** *(2006.01)*

(21) Application number: **17850660.6**

(22) Date of filing: **24.08.2017**

(86) International application number:
**PCT/JP2017/030328**

(87) International publication number:
**WO 2018/051756 (22.03.2018 Gazette 2018/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **16.09.2016　JP 2016182168**

(71) Applicant: **J.E.T. Co., Ltd.
Asakuchi-gun, Okayama 719-0302 (JP)**

(72) Inventors:
 • **YAMASHITA Masatoshi
  Asakuchi-gun
  Okayama 719-0302 (JP)**
 • **OHTAGAKI Manabu
  Asakuchi-gun
  Okayama 719-0302 (JP)**
 • **HASHIMOTO Shigeki
  Asakuchi-gun
  Okayama 719-0302 (JP)**
 • **YOSHIO Hideaki
  Asakuchi-gun
  Okayama 719-0302 (JP)**

(74) Representative: **Bandpay & Greuter
30, rue Notre-Dame des Victoires
75002 Paris (FR)**

(54) **BATTERY PRODUCTION METHOD AND BATTERY PRODUCTION DEVICE**

(57)　　Provided is a battery production method including a first step of pressurizing a predetermined region of a plurality of mutually overlapping collector foils (14) exposed from an end of an electrode (12), thereby forming a compressed region (16) where spaces between adjacent collector foils (14) are reduced, and a second step of joining the plurality of collector foils (14) together in an inner region of the compressed region (16) by ultrasonic welding, thereby forming a joining region (18) where the plurality of collector foils (14) are integrated, and also provided is a battery production device, whereby the occurrence of a defect can be reduced.

**FIG. 2A**

**(Cont. next page)**

# FIG. 2B

**Description**

Technical Field

The present invention relates to a battery production method and a battery production device.

Background Art

The capacities of secondary batteries such as lithium-ion batteries (LIBs) and nickel metal hydride batteries are being increased to be used as on-vehicle power sources or stationary storage batteries. A secondary battery includes electrodes having ends from which a plurality of mutually overlapping collector foils are exposed, and includes leads joined to the plurality of collector foils. An aluminum lead is commonly joined to aluminum collector foils on a positive electrode, and a nickel or copper lead is commonly connected to copper collector foils on a negative electrode.

Since large current instantaneously flows through a secondary battery, a plurality of collector foils and a lead thereof are commonly joined together by collective welding using ultrasonic waves (for example, Patent Literature 1). In a secondary battery, when the number of overlapping collector foils becomes greater, the battery capacity is increased. However, when the number of collector foils is increased, stable joining of the collector foils and a lead by ultrasonic welding becomes difficult.

Citation List

Patent Literature

Patent Literature 1: Japanese Patent Laid-Open No. 2009-87611

Summary of Invention

Technical Problem

In order to more stably join a plurality of collector foils and a lead together by ultrasonic welding, the plurality of collector foils need to be satisfactorily integrated. Deformation and breakages of the collector foils need to be avoided as much as possible.

Therefore, an object of the present invention is to provide a battery production method and a battery production device in which occurrence of a defect can be reduced.

Solution to Problem

A battery production method according to the present invention includes:

a first step of pressurizing a predetermined region of a plurality of mutually overlapping collector foils exposed from an end of an electrode, thereby forming a compressed region where spaces between adjacent collector foils are reduced, and
a second step of joining the plurality of collector foils together in an inner region of the compressed region by ultrasonic welding, thereby forming a joining region where the plurality of collector foils are integrated.

A battery production device according to the present invention includes:

a pressurization unit that pressurizes a predetermined region of a plurality of mutually overlapping collector foils exposed from an end of an electrode, and thereby forms a compressed region where spaces between adjacent collector foils are reduced,
a joining unit that joins the plurality of collector foils together in an inner region of the compressed region by ultrasonic welding using a horn and an anvil, and thereby forms a joining region where the plurality of collector foils are integrated, and
a determination unit that determines a quality of the joining region, based on an output waveform indicating a time change in an output value of the horn.

Advantageous Effects of Invention

According to the present invention, prior to joining of the plurality of collector foils by ultrasonic welding, the plurality of collector foils are pressurized in the region larger than the region where joining is to be performed. The plurality of collector foils are compressed by pressurization. Accordingly, air layers (air traps) interposed between the adjacent collector foils are substantially vanished so that the adjacent collector foils can come into surface contact with each other.

Since the plurality of collector foils in the tight adhesion state are joined together by ultrasonic welding, any problem caused by air traps is avoided. As a result of this, a battery in which occurrence of a defect can be reduced, can be produced.

The battery production device of the present invention includes not only the pressurization unit that forms the compressed region and the joining unit that forms the joining region but also the determination unit that determines whether the joining region is defective or non-defective. Whether the joining region is defective or non-defective is determined on the basis of the output waveform of the horn forming the joining region. Therefore, the battery production device of the present invention can determine whether the joining region is defective or non-defective while forming the joining region where the plurality of collector foils are integrated.

Moreover, by use of the production device of the present invention, any problem caused by the air traps interposed between the adjacent collector foils can be avoided. Therefore, the plurality of collector foils can be stably integrated by ultrasonic welding. Since the output waveform of the horn during the ultrasonic welding is stable, whether the joining state is defective or non-defective can be easily determined on the basis of the output waveform.

Brief Description of Drawings

FIG. 1 is an exploded perspective view illustrating a part of a battery produced by a method of an embodiment.

FIG. 2 is a schematic view illustrating a production method of the embodiment wherein FIG. 2A illustrates a first step and FIG. 2B illustrates a second step.

FIG. 3 is a photographic image of a cross section of a sample produced by application of the method of the embodiment.

FIG. 4 is a schematic view of a cross section of a sample produced by application of a conventional method.

FIG. 5 is a graph showing the output waveform of a horn during ultrasonic welding.

FIG. 6 is an explanatory diagram of an algorithm for determining whether a joining state is defective or non-defective.

FIG. 7 is a schematic view illustrating a production method of a modification wherein FIG. 7A illustrates a first step and FIG. 7B illustrates a second step.

Description of Embodiments

Hereinafter, an embodiment according to the present invention is described in detail with reference to the drawings.

1. Overall configuration

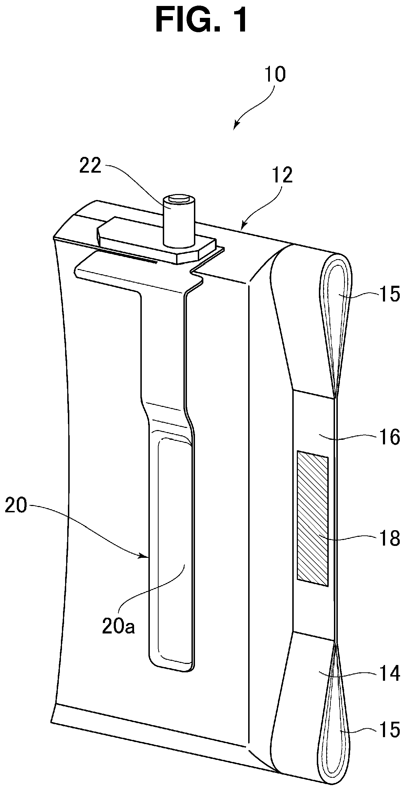

A battery production device of the present invention includes a pressurization unit, a joining unit, and a determination unit. The pressurization unit pressurizes a predetermined region of a plurality of mutually overlapping collector foils exposed from an end of an electrode, and thereby forms a compressed region where spaces between the adjacent collector foils are reduced. The joining unit joins the plurality of collector foils together in an inner region of the compressed region by ultrasonic welding using a horn and an anvil, and thereby forms a joining region where the plurality of collector foils are integrated. The determination unit determines whether the joining region is defective or non-defective on the basis of the output waveform indicating the time change in the output value of the horn. A battery 10 illustrated in FIG. 1 can be produced with use of the battery production device of the present invention.

The battery 10 illustrated in FIG. 1 includes an electrode 12 to which a lead 20 is joined. A connection terminal 22 is connected to the lead 20. A plurality of wound collector foils 14 are exposed from an end of the electrode 12 while overlapping one another. The plurality of overlapping collector foils 14 include a non-compressed region 15 and a compressed region 16. In the non-compressed region 15, since the collector foils 14 are adjacent to each other via air layers, the collector foils 14 are not necessarily in surface contact with each other.

In the compressed region 16, the adjacent collector foils 14 are in surface contact with each other. Therefore, the thickness of the compressed region 16 is substantially equal to the total thickness of the collector foils 14 included therein. The plurality of collector foils 14 are joined together and integrated in a joining region 18 inside the compressed region 16 by ultrasonic welding.

The lead 20 is joined, at a joining surface 20a, to the joining region 18 of the plurality of collector foils 14 by ultrasonic welding.

2. Production method

A production method of the present embodiment includes a first step of forming the compressed region 16 on the plurality of overlapping collector foils 14, and a second step of forming, inside the compressed region 16, the joining region 18 where the plurality of collector foils 14 are integrated. Hereinafter, the first step and the second step are described.

(First step)

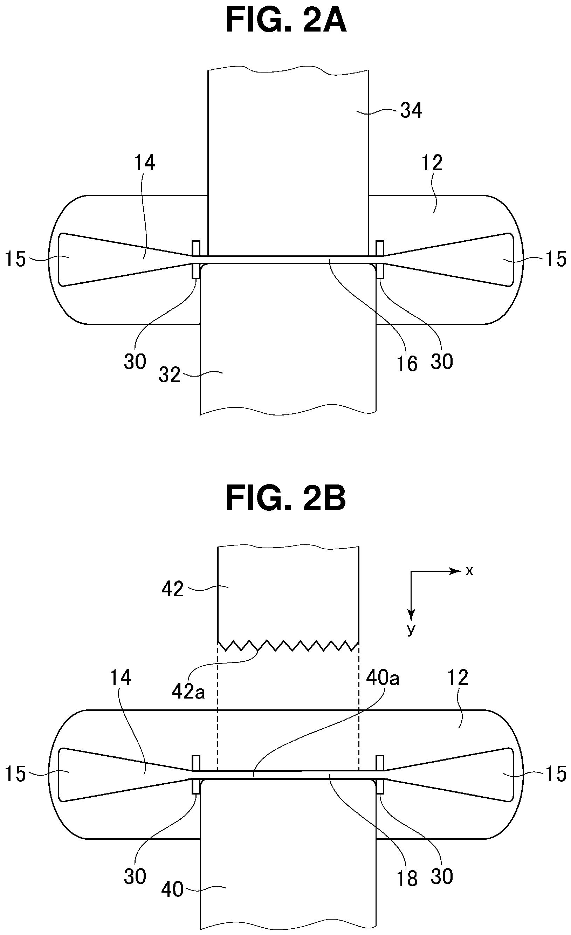

The first step is performed by the pressurization unit of the production device. In the first step, the plurality of mutually overlapping collector foils 14 exposed from the end of the electrode 12 are pressurized with a machine exclusively for pressing, as illustrated in FIG. 2A. Specifically, the plurality of collector foils 14 are placed on a pressing die 32, and a predetermined region of the plurality of collector foils 14 is pressurized with a pressing punch 34. This pressurization is so-called impact pressing of pressing an object by applying an impact force thereto by using a female die and a male die.

The pressing die 32 and the pressing punch 34 are selected, as appropriate, according to the material or the number of the plurality of collector foils 14, or the area of the predetermined region to be pressurized. The pressing punch 34 may have a shape slightly tapered toward a tip end.

In the pressurization, points near the non-compressed region 15 of the plurality of collector foils 14 are preferably held by retainer tools 30 such that the plurality of collector foils 14 are fixed in the thickness direction. This state is maintained until the second step is completed. Arbitrary tools capable of fixing the plurality of collector foils 14 in the thickness direction can be used as the retainer tools 30. For example, rein-made products can be used as the retainer tools 30.

In the first step, the pressurization is preferably carried out at pressure which is at least two times as high as pressure to be applied in the second step. For example, when pressure of approximately 60 to 300 kgf/cm$^2$ is to be applied in the second step, the pressure (first pressure) in the first step may be adjusted to approximately 120 to 600 kgf/cm$^2$. The first pressure can be adjusted, as appropriate, according to the material, thickness, number, and the like of the collector foils such that the adjacent collector foils are brought into surface contact with each other. For example, when 60 copper-made collector foils are included, the first pressure may be adjusted to approximately 500 to 1,000 kgf/cm$^2$. The magnitude of the first pressure is desirably set also in view of the area of the predetermined region of the plurality of collector foils to be pressurized.

By the pressurization, the air layers (air traps) between the adjacent collector foils 14 are substantially vanished so that the spaces between the collector foils 14 are reduced. In the plurality of collector foils 14, the adjacent collector foils 14 are in surface contact with each other to form the compressed region 16.

(Second step)

The second step is performed by the joining unit of the production device. In the second step, the plurality of collector foils 14 having undergone the first step are placed on an anvil 40, as illustrated in FIG. 2B, and joining is carried out in the joining region 18 by ultrasonic welding using a horn 42. The joining region 18 is an inner region of the compressed region 16 (FIG. 2A) formed on the plurality of collector foils 14 in the first step. Specifically, the inner region refers to a region located inside in a plan view within a plane perpendicular to the layered direction of the plurality of collector foils 14.

The horn 42 has a pressing surface 42a that has a plurality of protrusions formed thereon and that presses the joining region 18 of the plurality of collector foils 14. The anvil 40 has a support surface 40a that has a plurality of protrusions (not illustrated) formed thereon and that supports the plurality of collector foils 14 while holding the plurality of collector foils 14 between the support surface 40a and the pressing surface 42a of the horn 42.

The pressure (second pressure) which is applied in the second step can be equal to or lower than the aforementioned first pressure, but is preferably equal to or lower than one half of the first pressure. The second pressure is generally several tens to several hundreds of kgf/cm$^2$. The conditions of ultrasonic waves may be approximately a frequency of 20 to 40 kHz, an output of 400 to 4000 W, and a welding time of 0.2 to 2 seconds.

The horn 42 oscillates with an amplitude of approximately 10 to 60 $\mu$m in the x-axis direction while pressing the plurality of collector foils 14 in the y-axis direction with predetermined current flowing therethrough. As a result of this, the joining region 18 where the plurality of collector foils 14 are joined together and integrated by ultrasonic welding is formed.

3. Operation and effects

In the battery production method of the present embodiment, prior to ultrasonic welding of the plurality of collector foils 14, the plurality of collector foils 14 are pressurized, whereby the spaces between the adjacent collector foils 14 are reduced (first step). The adhesion between the collector foils 14 is enhanced because no air layers (air traps) substantially exist between the adjacent collector foils 14.

The plurality of collector foils 14 in the tight adhesion state are joined together and integrated by ultrasonic welding (second step). No air traps exist between the adjacent collector foils 14. Therefore, even when ultrasonic welding is carried out, deformation, wrinkles, and breakages (cleaves) of the collector foils are less likely to occur. The plurality of collector foils 14 are satisfactorily integrated in the joining region 18 so that deterioration of the strength due to a joining defect can be avoided.

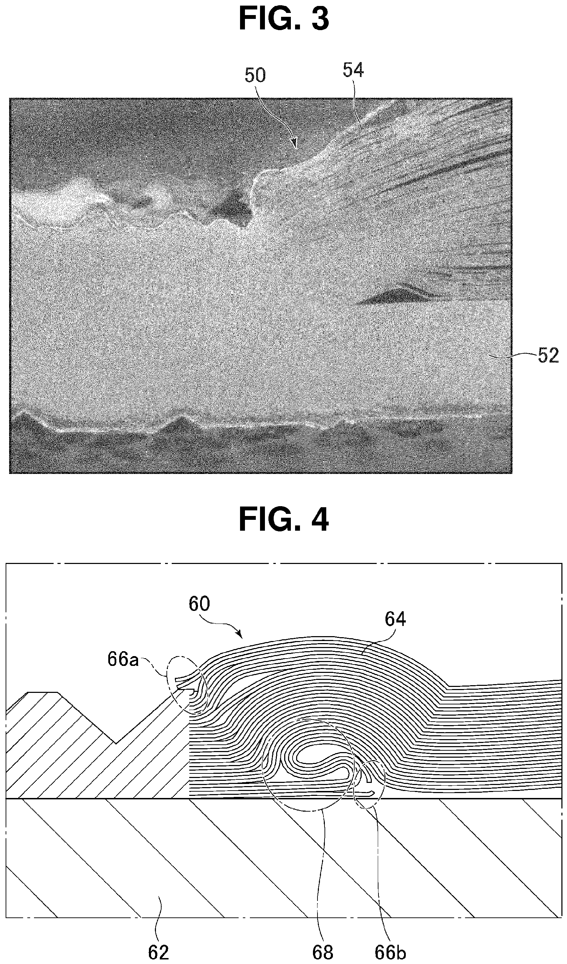

FIG. 3 shows a photographic image of a cross section of a sample 50 obtained by application of the aforementioned first step and second step. The sample 50 includes a plurality (sixty) of collector foils 54 joined together on a base material 52. In preparation of the sample 50, spaces between the adjacent collector foils are reduced by pressurization of the plurality of collector foils 54, and subsequently, ultrasonic welding is carried out to join the plurality of collector foils 54 together with the base material 52.

The collector foils 54 of the sample 50 are aligned, layered, and integrated while being in surface contact with each other. In the collector foils 54, any defect such as deformation, wrinkles, or bending is not found. Since the plurality of collector foils 54 are satisfactorily integrated, any problem such as a defect in joining to the base material 52 or insufficient strength can be avoided.

FIG. 4 is a schematic diagram of a cross section of a sample 60 obtained by the second step alone without involving the first step. A method which involves only ultrasonic welding of the second step, is equivalent to a conventional production method. The sample 60 includes a plurality of collector foils 64 joined together on a base material 62. The collector foils 64 on the front surface or near the front surface are cut in such a manner shown in a region 66a. The plurality of collector foils 64 in an inner region 68 are found to be deformed. A cut in the collector foils 64 has occurred also in an inner region 66b where deformation is large.

When the first step is not performed, the plurality of collector foils 64 provided with air traps are subjected to ultrasonic welding. The air traps between the collector foils cause various failures during ultrasonic welding.

Since the air traps inhibit propagation of ultrasonic waves from the horn, stable welding cannot be carried out. In order to allow propagation of sufficient ultrasonic waves from the horn to the collector foils on the anvil side farther from the horn, the output of ultrasonic waves needs to be increased. When a high output of ultrasonic waves is applied, the collector foils on the horn side are damaged to be broken, as illustrated in FIG. 4 (region 66a). Due to the existence of the air traps between the adjacent collector foils, the collector foils are displaced by the oscillation of the horn in the crosswise direction. Thus, cleaves and wrinkles are generated (regions 66b, 68).

When ultrasonic welding is carried out, a horn is strongly pressed against a plurality of collector foils. Accordingly, the air traps interposed between the adjacent collector foils can be vanished. However, when the horn is strongly pressed, the contact resistance between the plurality of collector foils and the horn increases to inhibit the oscillation of the horn in the crosswise direction.

In the production method of the present embodiment, the air traps between the collector foils 14 have been reduced in the first step. Consequently, a trouble caused by the air traps during ultrasonic welding can be avoided. Due to satisfactory propagation of ultrasonic waves, welding can be carried out with a smaller output of ultrasonic waves. Also, pressing pressure to be applied during ultrasonic welding is decreased to the minimum. Thus, an effect that the life of the horn and the life of the anvil are extended is also provided.

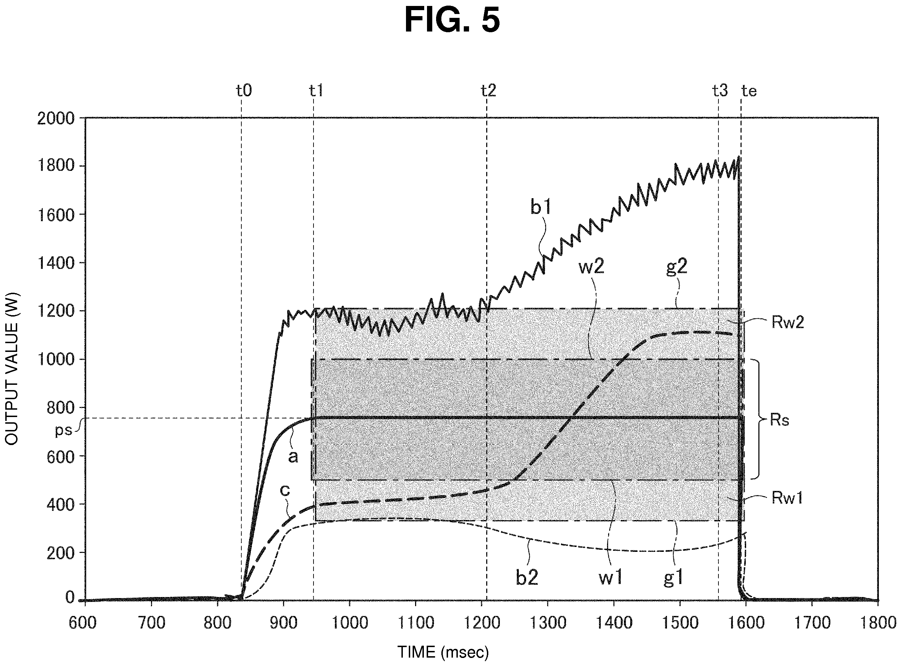

As described above, in the production method of the present embodiment, ultrasonic welding is carried out in the state where the adhesion between the plurality of collector foils 14 has been increased. Since no air traps exist between the adjacent collector foils 14 at the time of ultrasonic welding, ultrasonic waves efficiently and uniformly propagate from the horn 42-side collector foil to the anvil 40-side collector foil. Therefore, the output value (output power value) of the horn is stabilized at a predetermined value. Specifically, as indicated by a curve a in FIG. 5, an ideal output value of the horn increases from the start of welding (t0), reaches a stable output value ps at time t1, and is kept at the stable output value ps until the end of welding (te). The curve a is defined as a non-defective waveform.

In the production method of the present embodiment, variation of the output value of the horn during ultrasonic welding in the second step is small, and a flat portion can be found in a part of the output waveform. By use of this output waveform, whether the joining state is defective or non-defective can be determined while ultrasonic welding is being carried out. Determination of whether the joining state is defective or non-defective is made by the determination unit of the production device.

In a conventional production method, the output value of a horn is not stable (FIG. 5, curves b1, b2). The curves b1, b2 are defined as defective waveforms. In the curve b1, the output value abruptly increases after time t2. The reason for this is that air traps between the adjacent collector foils act as a resistance and a larger output is needed. In the curve

6

b2, the output value unstably varies within a smaller range.

In a conventional production method, the output value of a horn varies within a larger range or a smaller range. Therefore, only the maximum value of the output value of the horn is used for determination of whether the joining state is defective or non-defective, and thus, the reliability of quality determination is low.

In the production method of the present invention, the non-defective waveform (curve a) and the defective waveforms b1, b2 are used to set various reference values, as described later. Whether the joining state is defective or non-defective can be determined by comparison with the reference values.

As shown in FIG. 5, the output value region of (stable output value ps $\pm30\%$) is defined as a stable region Rs. As shown in FIG. 5, the lower limit and the upper limit of the stable region Rs are defined as a warning lower limit output value w1 and a warning upper limit output value w2, respectively. In addition, an output value equivalent to a value less than (stable output value ps -30%) but not less than (stable output value ps -50%) is defined as a non-defective lower limit output value g1, and an output value equivalent to (stable output value ps +50%) is defined as a non-defective upper limit output value g2.

In the example shown in FIG. 5, the non-defective lower limit output value g1 matches the output value of the defective waveform b2 at time t1, and the non-defective upper limit output value g2 matches the output value of the defective waveform b1 at time t1. A region between the non-defective lower limit output value g1 and the non-defective upper limit output value g2 is defined as a non-defective region Rg (not shown in FIG. 5). A region below the non-defective lower limit output value g1 and a region above the non-defective upper limit output value g2 are defective regions.

A region between the non-defective lower limit output value g1 and the warning lower limit output value w1, and a region between the non-defective upper limit output value g2 and the warning upper limit output value w2 are defined as first and second warning regions Rw1, Rw2, respectively. A waveform c reaching the second warning region Rw2 from the first warning region Rw1 through the stable region Rs is defined as a warning waveform.

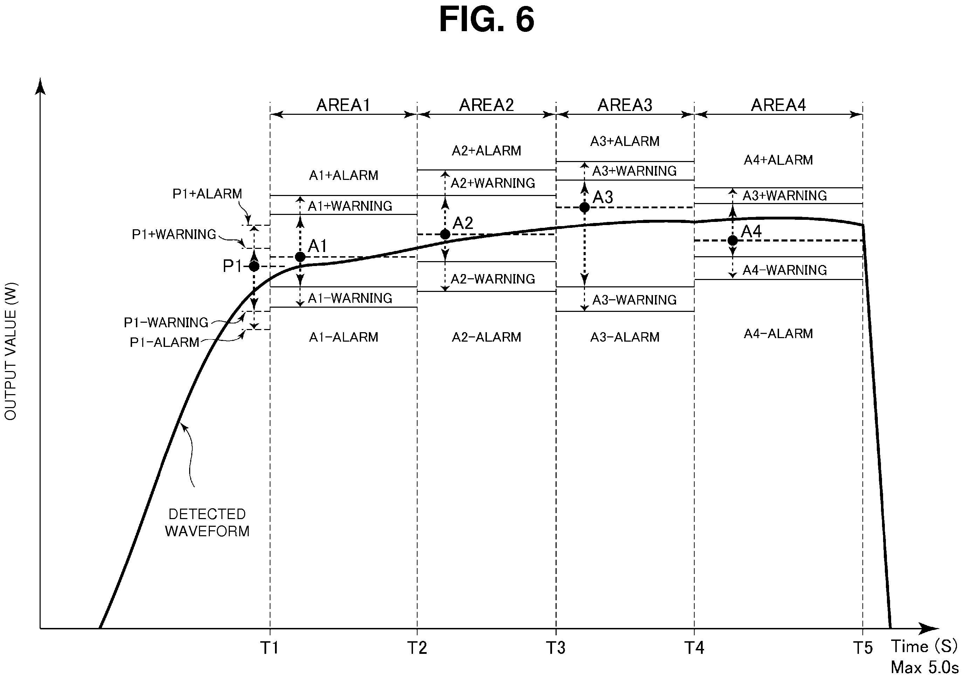

An algorithm for determination of whether the joining state is defective or non-defective is described with reference to FIG. 6.

By the aforementioned method, a sample is prepared by ultrasonic welding after tight adhesion of the plurality of collector foils is made, whereby a non-defective waveform is obtained in advance. In a detected waveform of the sample, a reference output value P1 is set on the basis of the non-defective waveform in a period from start of welding to time T1, and warning upper and lower limits (WARNING) and abnormality upper and lower limits (ALARM) at T1 are set with respect to the reference output value P1. Here, (P1+WARNING) is defined as a warning upper limit, and (P1-WARNING) is defined as a warning lower limit. Further, (P1+ALARM) is defined as an abnormality upper limit, and (P1-ALARM) is defined as an abnormality lower limit. The warning upper and lower limits (WARNING) correspond to the warning upper limit output value w2 and the warning lower limit output value w1 in FIG. 5. The abnormality upper and lower limits (ALARM) correspond to the non-defective upper limit output value g2 and the non-defective lower limit output value g1 in FIG. 5.

The detected value of a detected waveform of a measurement object at T1 is determined as follows. When the detected value of the detected waveform satisfies condition (1) below, the joining state is determined to be non-defective. When the detected value satisfies condition (4) or (5) below, the joining state is determined to be defective. When the detected value satisfies condition (2) or (3) below, the joining state is determined to be not completely defective but is determined to have low reliability, and a warning is issued.

```
P1+WARNING > detected value > P1-WARNING

                                      condition (1)


P1+WARNING < detected value < P1+ALARM  condition (2)


P1-WARNING > detected value > P1-ALARM  condition (3)


P1+ALARM < detected value               condition (4)


P1-ALARM > detected value               condition (5)
```

Similarly, in a period (AREA1) from time T1 to time T2, a reference value is set on the basis of the non-defective waveform of the sample, the warning upper and lower limits (WARNING) and the abnormality upper and lower limits (ALARM) at the time when T2 is reached are set with respect to the reference value. Here, (A1+WARNING) is defined as the warning upper limit, and (A1-WARNING) is defined as the warning lower limit. Further, (A1+ALARM) is defined as the abnormality upper limit, and (A1- ALARM) is defined as the abnormality lower limit.

When the detected value, of the detected waveform of a measurement object, between T1-T2 constantly satisfies a condition (6) below, the joining state is determined to be non-defective. When the detected value between T1-T2 satisfies condition (9) or (10) below even once, the joining state is determined to be defective. When the detected value between T1-T2 at least temporarily satisfies condition (7) or (8) below, the joining state is determined to be not completely defective but have low reliability, and a warning is issued.

```
A1+WARNING > detected value > A1-WARNING

                                    condition (6)


A1+WARNING < detected value < A1+ALARM  condition (7)


A1-WARNING > detected value > A1-ALARM  condition (8)


A1+ALARM < detected value               condition (9)


A1-ALARM > detected value               condition (10)
```

The same determination as that for (AREA1) is made for a period (AREA2) from time T2 to time T3, a period (AREA3) from time T3 to time T4, and a period (AREA4) from time T4 to time T5.

When none of the determination results of the period from start of the welding to time T1 and the periods (AREA1) to (AREA4) show a defect, the sample is non-defective.

As described above, whether the joining region is defective or non-defective can be determined by comparison between a non-defective waveform and a detected waveform. Thus, the quality can be sufficiently managed. Moreover, an effect that the life of the horn and the life of the anvil can be managed by use of the non-defective waveform, is also provided.

4. Modification

The present invention is not limited to the aforementioned embodiment, and may be modified, as appropriate, within the scope of the gist of the present invention.

In the aforementioned embodiment, the battery having the plurality of collector foils 14 wound therearound has been described. However, the plurality of collector foils 14 may be layered.

In the first step, the predetermined region of the plurality of collector foils 14 are pressurized by impact pressing using the pressing die 32 and the pressing punch 34. However, the predetermined region of the plurality of collector foils 14 may be pressurized by pressing the predetermined region using a roller. Thus, air layers interposed between the adjacent collector foils can be pushed out so that the spaces between the collector foils can be reduced.

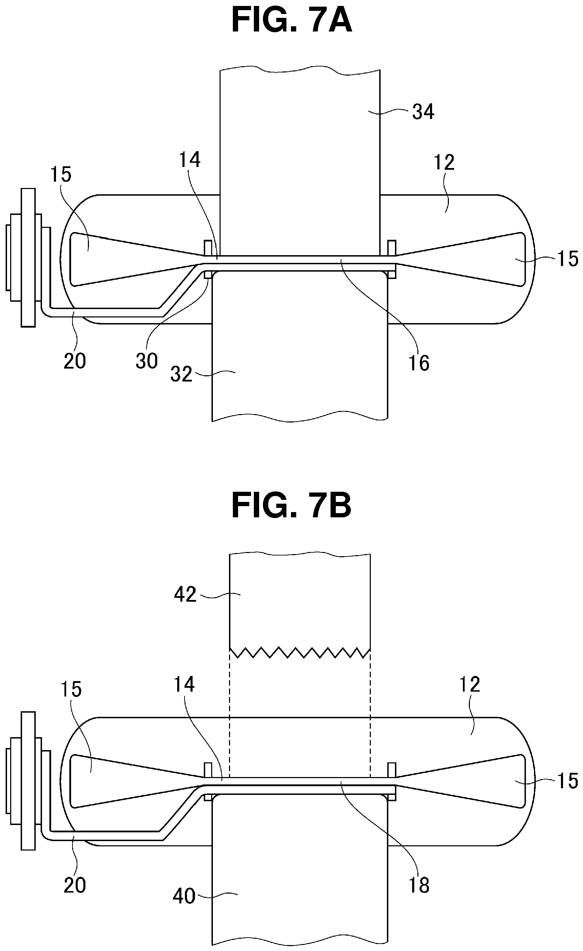

In the first step, the predetermined region of the plurality of collector foils 14 may be pressurized while the lead 20 is placed between the plurality of collector foils 14 and the pressing die 32, as illustrated in FIG. 7A. Next, the plurality of collector foils 14 and the lead 20 can be integrated in the joining region 18 by ultrasonic welding using the horn 42 and the anvil 40, as illustrated in FIG. 7B.

Reference Signs List

10   battery
12   electrode
14   collector foil

16    compressed region
18    joining region
20    lead

**Claims**

1.  A battery production method comprising:

    a first step of pressurizing a predetermined region of a plurality of mutually overlapping collector foils exposed from an end of an electrode, thereby forming a compressed region where spaces between adjacent collector foils are reduced; and
    a second step of joining the plurality of collector foils together in an inner region of the compressed region by ultrasonic welding, thereby forming a joining region where the plurality of collector foils are integrated.

2.  The battery production method according to claim 1, wherein
    the predetermined region of the plurality of collector foils is pressurized with first pressure in the first step, and the joining region is formed in the second step by pressurization with second pressure that is lower than the first pressure.

3.  The battery production method according to claim 2, wherein
    the first pressure is at least two times as high as the second pressure.

4.  The battery production method according to any one of claims 1 to 3, wherein
    the first step includes applying an impact force to the predetermined region of the plurality of collector foils.

5.  The battery production method according to any one of claims 1 to 4, wherein
    prior to the first step, the plurality of collector foils are fixed in a thickness direction with a retainer tool, and after the second step, the retainer tool is removed.

6.  The battery production method according to any one of claims 1 to 5, wherein
    a lead is placed, prior to the first step, to be in contact with the predetermined region of the plurality of collector foils, and the plurality of collector foils and the lead are integrated by the ultrasonic welding.

7.  The battery production method according to any one of claims 1 to 6, wherein
    the ultrasonic welding is carried out using a horn having a pressing surface that has a plurality of protrusions formed thereon and that presses the joining region of the plurality of collector foils, and an anvil having a support surface that has a plurality of protrusions formed thereon and that supports the plurality of collector foils while holding the plurality of collector foils between the support surface and the pressing surface, and
    the second step includes determining whether the joining region is defective or non-defective, based on an output waveform indicating a time change in an output value of the horn.

8.  The battery production method according to claim 7, wherein
    a non-defective upper limit output value and a non-defective lower limit output value are set for the output value of the horn, a region between the non-defective upper limit output value and the non-defective lower limit output value is defined as a non-defective region, and a plurality of measured output values are obtained by measurement of a plurality of points between start and end of the ultrasonic welding, and
    when all of the plurality of measurement output values fall within the non-defective region, the joining region is determined to be non-defective.

9.  The battery production method according to claim 8, wherein
    a stable region is set between a warning upper limit output value that is less than the non-defective upper limit output value and a warning lower limit output value that is greater than the non-defective lower limit output value, and when one of the plurality of measurement output values falls outside of the stable region and falls within the non-defective region, a warning is issued.

10. The battery production method according to claim 9, wherein
    the output waveform is divided into a plurality of time-based sections, and the non-defective upper limit output value, the non-defective lower limit output value, and the stable region are set for each of the plurality of sections.

**11.** A battery production device comprising:

a pressurization unit that pressurizes a predetermined region of a plurality of mutually overlapping collector foils exposed from an end of an electrode, and thereby forms a compressed region where spaces between adjacent collector foils are reduced;

a joining unit that joins the plurality of collector foils together in an inner region of the compressed region by ultrasonic welding using a horn and an anvil, and thereby forms a joining region where the plurality of collector foils are integrated; and

a determination unit that determines whether the joining region is defective or non-defective, based on an output waveform indicating a time change in an output value of the horn.

# FIG. 1

# FIG. 2A

# FIG. 2B

# FIG. 3

# FIG. 4

# FIG. 5

# FIG. 6

EP 3 514 857 A1

# FIG. 7A

# FIG. 7B

## INTERNATIONAL SEARCH REPORT

| International application No. |
| --- |
| PCT/JP2017/030328 |

**A. CLASSIFICATION OF SUBJECT MATTER**

*H01M2/26*(2006.01)i, *B23K20/10*(2006.01)i, *B23K31/00*(2006.01)i, *H01M10/04*(2006.01)i

According to International Patent Classification (IPC) or to both national classification and IPC

**B. FIELDS SEARCHED**

Minimum documentation searched (classification system followed by classification symbols)
H01M2/26, B23K20/10, B23K31/00, H01M10/04

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2015-195219 A  (Hitachi Automotive Systems, Ltd.),<br>05 November 2015 (05.11.2015),<br>paragraphs [0020] to [0023]; fig. 2, 3B<br>(Family: none) | 1,5,6<br>2-4,7-11 |
| X<br>A | WO 2014/002227 A1  (Toyota Motor Corp.),<br>03 January 2014 (03.01.2014),<br>paragraphs [0040] to [0043]; fig. 7 to 9<br>& US 2015/0147598 A1<br>paragraphs [0055] to [0058]; fig. 7 to 9<br>& KR 10-2015-0016348 A  & CN 104396050 A | 1,5<br>2-4,6-11 |
| A | JP 2014-22203 A  (Toyota Motor Corp.),<br>03 February 2014 (03.02.2014),<br>(Family: none) | 1-11 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 September 2017 (21.09.17) | 03 October 2017 (03.10.17) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2017/030328 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-205421 A  (Nissan Motor Co., Ltd.), 04 August 2005 (04.08.2005), (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009087611 A